# EUROPÄISCHE PATENTSCHRIFT

(11) **EP 2 092 194 B1**
(45) Veröffentlichungstag und Bekanntmachung des Hinweises auf die Patenterteilung: **11.08.2010**
(21) Anmeldenummer: 07820461.7
(22) Anmeldetag: 21.09.2007
(51) Int. Cl.: F04B 35/01, F04B 43/04, F04B 39/12, B29C 73/16

(54) **KOMPRESSOREINHEIT**
COMPRESSOR UNIT
UNITÉ DE COMPRESSEUR

(30) Priorität: 11.11.2006 DE 102006053245
(43) Veröffentlichungstag der Anmeldung: 26.08.2009
(73) Patentinhaber: Continental Reifen Deutschland GmbH, 30165 Hannover (DE)
(72) Erfinder: DETERING, Rainer, 30926 Seelze (DE)
(74) Vertreter: Finger, Karsten
(86) Internationale Anmeldenummer: PCT/EP2007/060039
(87) Internationale Veröffentlichungsnummer: WO 2008/058795

(56) Entgegenhaltungen:
- EP-A- 0 972 616
- EP-A- 1 621 325
- US-A- 4 023 467
- US-A- 5 655 887
- US-A- 6 059 542
- US-A1- 2004 141 855

## Beschreibung

Die Erfindung betrifft eine Kompressoreinheit, insbesondere zur Luftverdichtung innerhalb tragbarer / transportabler Geräte, welche mindestens einen Motor und einen über einen Schubkurbeltrieb angetriebenen Hubkolbenverdichter aufweist, wobei der in einem Kurbelgehäuse angeordnete Schubkurbeltrieb aus einem Kurbelrad und einer mit Kurbelrad und einem Kolben verbundenen Pleuelstange besteht und der Kolben in einem mit einem Zylinderkopf verbundenen Zylinder bewegbar ist.

Üblicherweise bestehen Kompressoreinheiten aus einer Reihe von Bauteilen, wie z. B. Motorflansche, Kurbelgehäuse und Lagerungen, Getriebesätze, Zylinderbauteile, Pleuelstange etc., die in ihren Abmessungen eng toleriert sind und daher sowohl in der Herstellung als auch in der Montage einen relativ hohen Aufwand und somit kostenintensive Arbeitsschritte erfordern.

Die DE 44 29 097 A1 offenbart einen Kolbenverdichter für gasförmige Medien, bei dem nicht nur viele eng tolerierte Bauteile vorhanden sind, sondern sogar noch ein verstellbarer Verdichtungsraum (Verdichtungsvolumen) zur Minimierung des so genannten Totvolumens im oberen Totpunkt. Ausgehend von der dortigen Abtriebs- bzw. Antriebswelle des Motors schließt sich an den Motor zunächst ein mit einem Deckel versehenes Verdichtergehäuse an, welches das mit einem Exzenterzapfen ausgebildete Kurbelrad, das Pleuel mit dem Pleuellager und einen einschraubbaren Zylinderkörper aufnimmt. Der Zylinderkörper bzw. das Verdichtergehäuse sind mit einem separaten Zylinderdeckel verschraubt, welcher auch das Auslassventil und die Auslassleitung beinhaltet. Eine solche Ausführung einer Kompressoreinheit mit ihrem relativ komplizierten Aufbau ist jedoch für einfachste und in Großserien hergestellte Geräte aus Kostengründen nur bedingt einsetzbar.

Die US 5,655,887, auf welche der Oberbegriff von Patentanspruch 1 beruht, offenbart einen gattungsgemäßen Kompressor, bei dem Zylinder, Zylinderkopf und Zylinderhalterung einteilig ausgebildet sind und bei dem der Zylinderkopf eine Öffnung aufweist, die durch einen Deckel verschlossen ist. Durch den Deckel wird ein Auslassventil positioniert. Auch hier scheint der Aufbau des Gerätes relativ kompliziert und für eine leichte Montage ungeeignet.

Kompressoreinheiten zur Luftverdichtung in Form von tragbaren / transportablen Geräten, also Kleinkompressoren z. B. für das Aufpumpen von Autoreifen oder Schlauchbooten, benötigen aus Kostengründen einfachste Bauteile bei einer trotzdem sicher funktionsfähigen Konstruktion. Davon ausgehend bestand die Aufgabe der Erfindung darin, eine Kompressoreinheit insbesondere zur Luftverdichtung mit einem Hubkolbenverdichter innerhalb tragbarer / transportabler Geräte bereitzustellen, welche möglichst wenige und auf einfachste Weise herstellbare Bauteile sowie eine sichere Funktionsfähigkeit aufweist und eine Konstruktion bereitstellt, die die erforderlichen Toleranzen auf wenige zu bearbeitende Schlüsselbauteile reduziert.

Gelöst wird diese Aufgabe durch die Merkmale des Hauptanspruchs. Weitere vorteilhafte Ausbildungen sind in den Unteransprüchen offenbart.

Die erfindungsgemäße Kompressoreinheit ist **dadurch gekennzeichnet, dass** der Zylinder und der Zylinderkopf einteilig als ein Bauteil ausgebildet sind und dieses Bauteil ebenfalls einteilig mit Auslasseinrichtungen, insbesondere mit Anschlüssen, Auslassleitungen und - ventilen sowie mit einem Anschluss für ein Manometer versehen ist. Durch eine solche Integration und Zusammenfassung von Funktionsteilen werden einerseits die Anzahl der Teile, das Gewicht der Kompressoreinheit und andererseits die Anzahl der Bearbeitungsschritte bei der Herstellung reduziert, wodurch eine besonders kostengünstige Ausbildung der Kompressoreinheit erreicht wird.

Dabei können die Anschlüsse oder Auslassleitungen auf unterschiedlichste Weise so ausgebildet sein, dass Zusatzeinrichtungen oder Aggregate entweder direkt oder mit Hilfe von weiteren separaten Leitungselementen, wie etwa Schläuchen, angeschlossen werden können. Bei Kompressoreinheiten zur Luftverdichtung für das Aufpumpen von Autoreifen kann dann am Zylinderkopf lediglich der Manometeranschlussstutzen integriert und das Manometer als solches Teil eines umgebenden Gehäuses sein. Auch können die die Anschlüsse für eine Dichtmittelflasche eine direkte Anschlussmöglichkeit bereitstellen oder über Schläuche einen Flaschenanschluss ermöglichen.

Das den Zylinder und den Zylinderkopf umfassende Bauteil ist dabei mit einer durch einen Deckel verschließbaren Öffnung versehen ist, wobei der Deckel sich innerhalb des Bauteiles erstreckt zur Positionierung von Zusatzteilen und zur Strömungsleitung. Hierdurch können bei kompakter Bauweise Funktionen auf einen eingeschobenen Deckel als Zusatzbauteil übertragen werden, wodurch die Bearbeitung bzw. das Nacharbeiten des integrierten Bauteiles "Zylinder und Zylinderkopf" im Hinblick auf enge Toleranzen reduziert wird. So kann der Deckel beispielsweise bei einem angeschlossenen Manometer letzteres im Zylinderkopf ausrichten und fixieren.

Eine weitere vorteilhafte Weiterbildung besteht darin, dass das den Zylinder und den Zylinderkopf umfassende Bauteil Kühlflächen aufweist, insbesondere Kühlrippen. Solche Kühlflächen lassen sich gerade durch eine integrierte Bauweise leicht den nötigen Stellen vorsehen und sind bei der hohen Druckbelastung, dem hohen Massenstrom und der durch die komplizierten Strömungsgeometrie hohen Dissipation oft notwendig, um die Baugröße auch bei hoher Leistung gering zu halten.

Ein weiterer durch eine Integration erreichbarer Vorteil besteht darin, dass auch eine Aufnahme für ein Überdruckventil in dem den Zylinder und den Zylinderkopf umfassenden Bauteil enthalten ist. Hierdurch ergibt sich eine einfache Einbaumöglichkeit für den Fall, dass ein Überdruckventil erforderlich ist. Ein solches nutzt man beispielsweise dann, wenn das Totraumvolumen des Kolbenkompressors reduziert, jedoch eine Überbelastung durch Kompressionsdruck weiterhin vermieden werden soll.

Eine weitere vorteilhafte Weiterbildung besteht darin, dass das den Zylinder und den Zylinderkopf umfassende Bauteil eine Aufnahme für den Anschluss einer Dichtmittelflasche aufweist, sodass bei Benutzung der Kompressoreinheit innerhalb eines Reparatursatzes bzw. einer Reparatureinrichtung zum Abdichten und Aufpumpen aufblasbarer Gegenstände, insbesondere zum Abdichten und Aufpumpen von Kraftfahrzeugreifen, auf einfache Weise eine Flasche / ein Behälter angeschlossen werden kann, die/der das zur Reparatur nötige Dichtmittel enthält. Ein solches Dichtmittel muss üblicherweise in den aufblasbaren Gegenstand oder Reifen eingebracht werden, wo es dann koaguliert und ein evtl. vorhandenes Loch schließen kann. Eine solche Reparatureinrichtung enthält dabei im Wesentlichen eine Druckgasquelle, eine Ventil- und Verteilereinheit für Dichtmittel und Druckgas mit einer an die Druckgasquelle anschließbaren Einlassleitung und einer an den aufblasbaren Gegenstand anschließbaren Auslassleitung, einen Schlauch als Verbindungsmittel zwischen Auslassleitung und aufblasbarem Gegenstand, ein Verbindungsmittel zur Energiezufuhr der Einrichtung sowie Schalt-, und/oder Steuer- und Anzeigeeinrichtungen für den Betrieb der Einrichtung.

Vorteilhafterweise ist das den Zylinder und den Zylinderkopf umfassende Bauteil als Gussteil ausgebildet ist, insbesondere als Spritzgussteil oder Druckgussteil. Durch eine solche Ausführung wird sowohl eine beliebige Formgebung möglich als auch eine große Materialauswahl. So kann den Zylinder und den Zylinderkopf umfassenden Bauteil aus metallischem Druckguss ebenso bestehen wie aus Kunststoff-Spritzguss.

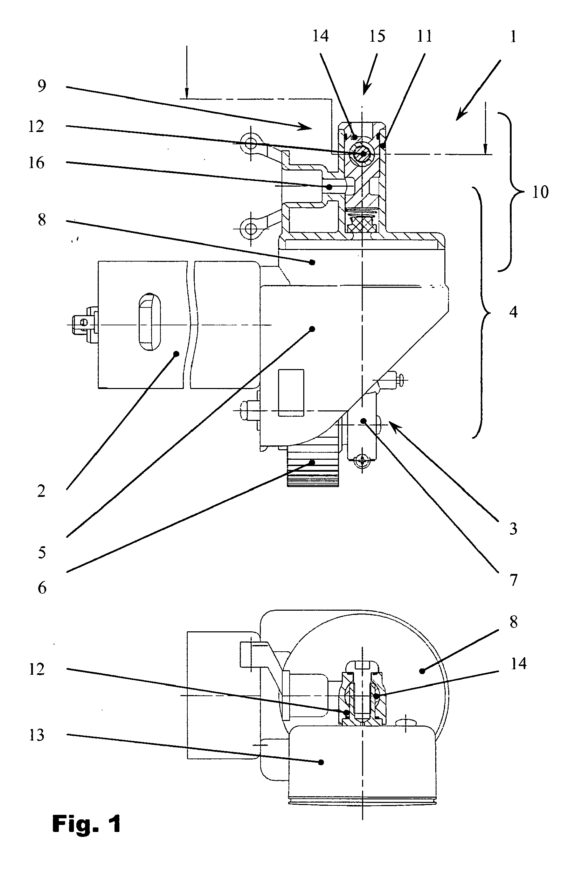

Anhand eines Ausführungsbeispieles soll die Erfindung näher erläutert werden. Die Fig. 1 zeigt eine erfindungsgemäße Kompressoreinheit 1 mit teilweise geschnittenen Bauteilen, sowie in zwei Ansichten.

Die Kompressoreinheit 1 besteht im Wesentlichen aus einen Motor 2 und einen über einen Schubkurbeltrieb 3 angetriebenen Hubkolbenverdichter 4 aufweist.

Der Hubkolbenverdichter 4 umfasst einen in einem Kurbelgehäuse 5 angeordneten Schubkurbeltrieb 3 mit einem Kurbelrad 6 und einer mit dem Kurbelrad 6 und einem hier nicht näher dargestellten Kolben verbundenen Pleuelstange 7. Der Kolben ist in einem Zylinder 8 bewegbar.

Der Zylinder 8 und der Zylinderkopf 9 sind hierbei einteilig als ein Bauteil 10 ausgebildet. Weiterhin ist das Bauteil 10 ebenfalls einteilig mit der Auslassleitung 11 und einem Anschluss 12 für ein Manometer 13 versehen.

Das den Zylinder 8 und den Zylinderkopf 9 umfassende Bauteil 10 weist dabei in der Auslassleitung 11 eine durch einen Deckel 14 verschließbaren Öffnung 15 auf. Der Deckel 14 erstreckt sich innerhalb des Bauteiles, wodurch das Manometer 13 durch Formschluss verdrehsicher positioniert wird. Der Deckel 14 schließt nicht nur die Öffnung 15, sondern erlaubt und leitet auch das Ausströmen des Druckmediums durch die Auslassöffnung 16.

### Bezugszeichenliste

### (Teil der Beschreibung)

- 1: Kompressoreinheit
- 2: Motor
- 3: Schubkurbeltrieb
- 4: Hubkolbenverdichter
- 5: Kurbelgehäuse
- 6: Kurbelrad
- 7: Pleuelstange
- 8: Zylinder
- 9: Zylinderkopf
- 10: Bauteil
- 11: Auslassleitung
- 12: Anschluss
- 13: Manometer
- 14: Deckel
- 15: Öffnung
- 16: Auslassöffnung

## Patentansprüche

1. Kompressoreinheit, insbesondere zur Luftverdichtung innerhalb tragbarer / transportabler Geräte, welche mindestens einen Motor (2) und einen über einen Schubkurbeltrieb (3) angetriebenen Hubkolbenverdichter (4) aufweist, wobei der in einem Kurbelgehäuse (5) angeordnete Schubkurbeltrieb (3) aus einem Kurbelrad (6) und einer mit Kurbelrad (6) und einem Kolben verbundenen Pleuelstange (7) besteht und der Kolben in einem mit einem Zylinderkopf verbundenen Zylinder (8) bewegbar ist, wobei der Zylinder (8) und der Zylinderkopf (9) einteilig als ein Bauteil (10) ausgebildet sind und dieses Bauteil (10) ebenfalls einteilig mit Auslasseinrichtungen, insbesondere mit Anschlüssen, Auslassleitungen (11) und - ventilen sowie mit einem Anschluss (12) für ein Manometer (13) versehen ist, wobei das den Zylinder (8) und den Zylinderkopf (9) umfassende Bauteil (10) mit einer durch einen Deckel (14) verschließbaren Öffnung (15) versehen ist und der Deckel sich innerhalb des Bauteiles erstreckt zur Positionierung von Zusatzteilen und zur Strömungsleitung,. **dadurch gekennzeichnet, dass** das angeschlossene Manometer (13) durch den innerhalb des Bauteiles sich erstreckenden Deckel (14) im Zylinderkopf ausgerichtet und fixiert ist.

2. Kompressoreinheit nach Anspruch 1, bei der das Manometer (13) durch den innerhalb des Bauteiles sich erstreckenden Deckel (14) durch Formschluss verdrehsicher positioniert ist.

3. Kompressoreinheit nach Anspruch 1 oder 2, **dadurch gekennzeichnet, dass** das den Zylinder (8) und den Zylinderkopf (9) umfassende Bauteil (10) Kühlflächen, insbesondere Kühlrippen aufweist.

4. Kompressoreinheit nach Anspruch 1 bis 3, **dadurch gekennzeichnet, dass** das den Zylinder (8) und den Zylinderkopf umfassende Bauteil (9) eine Aufnahme für ein Überdruckventil aufweist.

5. Kompressoreinheit nach Anspruch 1 bis 4, **dadurch gekennzeichnet, dass** das den Zylinder (8) und den Zylinderkopf umfassende Bauteil (9) eine Aufnahme für den Anschluss einer Dichtmittelflasche aufweist.

6. Kompressoreinheit nach Anspruch 1 bis 5, **dadurch gekennzeichnet, dass** das den Zylinder(8) und den Zylinderkopf (9) umfassende Bauteil (10) als Gussteil ausgebildet

## Claims

1. Compressor unit, in particular for air compression within portable/transportable appliances, which has at least one motor (2) and a reciprocating piston compressor (4) driven via a slider-crank mechanism (3), a slider-crank mechanism (3) arranged in a crank case (5) consisting of a crank wheel (6) and of a connecting rod (7) connected to a crank wheel (6) and to a piston, and the piston being movable in a cylinder (8) connected to a cylinder head, the cylinder (8) and the cylinder head (9) being formed in one part as one component (10), and this component (10) likewise being provided in one part with outlet devices, in particular with connections, outlet lines (11) and outlet valves, and also with a connection (12) for a manometer (13), the component (10) which comprises the cylinder (8) and the cylinder head (9) being provided with an orifice (15) closable by means of a cover (14), and the cover extending within the component for the positioning of additional parts and for flow conduction, **characterized in that** the connected manometer (13) is aligned and fixed in the cylinder head by means of the cover (14) extending within the component.

2. Compressor unit according to Claim 1, in which the manometer (13) is positioned in an anti-twist manner by means of a form fit by the cover (14) extending within the component.

3. Compressor unit according to Claim 1 or 2, **characterized in that** the component (10) which comprises the cylinder (8) and the cylinder head (9) has cooling surfaces, in particular cooling ribs.

4. Compressor unit according to Claims 1 to 3, **characterized in that** the component (9) which comprises the cylinder (8) and the cylinder head has a receptacle for a pressure relief valve.

5. Compressor unit according to Claims 1 to 4, **characterized in that** the component (9) which comprises the cylinder (8) and the cylinder head has a receptacle for the connection of a sealant bottle.

6. Compressor unit according to Claim 1 to 5, **characterized in that** the component (10) which comprises the cylinder (8) and the cylinder head (9) is designed as a casting.

## Revendications

1. Unité de compresseur, notamment pour comprimer l'air à l'intérieur d'appareils portables/transportables, qui présente au moins un moteur (2) et un compresseur à piston alternatif (4) entraîné par le biais d'un mécanisme à vilebrequin (3), le mécanisme à vilebrequin (3) disposé dans un carter de vilebrequin (5) se composant d'une roue de vilebrequin (6) et d'une bielle (7) connectée à la roue de vilebrequin (6) et à un piston, et le piston pouvant être déplacé dans un cylindre (8) connecté à une culasse, le cylindre (8) et la culasse (9) étant réalisés d'une seule pièce sous forme d'un seul composant (10) et ce composant (10) étant pourvu, également d'une seule pièce, de dispositifs de sortie, notamment de raccords, de conduites de sortie (11) et de soupapes de sortie, ainsi que d'un raccord (12) pour un manomètre (13), le composant (10) comprenant le cylindre (8) et la culasse (9) étant pourvu d'une ouverture (15) pouvant être fermée par un couvercle (14) et le couvercle s'étendant à l'intérieur du composant pour positionner des pièces supplémentaires et pour guider l'écoulement, **caractérisée en ce que** le manomètre (13) raccordé est orienté et fixé dans la culasse par le couvercle (14) s'étendant à l'intérieur du composant.

2. Unité de compresseur selon la revendication 1, dans laquelle le manomètre (13) est positionné de manière solidaire en rotation par engagement positif à travers le couvercle (14) s'étendant à l'intérieur du composant.

3. Unité de compresseur selon la revendication 1 ou 2, **caractérisée en ce que** le composant (10) comprenant le cylindre (8) et la culasse (9) présente des surfaces de refroidissement, notamment des nervures de refroidissement.

4. Unité de compresseur selon les revendications 1 à 3, **caractérisée en ce que** le composant (10) comprenant le cylindre (8) et la culasse (9) présente un logement pour une soupape de surpression.

5. Unité de compresseur selon les revendications 1 à 4, **caractérisée en ce que** le composant (10) comprenant le cylindre (8) et la culasse (9) présente un logement pour le raccordement d'une bouteille de fluide sous pression.

6. Unité de compresseur selon les revendications 1 à 5, **caractérisée en ce que** le composant (10) comprenant le cylindre (8) et la culasse (9) est réalisé sous forme de pièce en fonte.
